# EUROPÄISCHE PATENTSCHRIFT

(11) **EP 1 218 628 B1**
(45) Veröffentlichungstag und Bekanntmachung des Hinweises auf die Patenterteilung: **02.02.2005**
(21) Anmeldenummer: 00965794.1
(22) Anmeldetag: 30.08.2000
(51) Int. Cl.: F02D 41/14

(54) **VERFAHREN ZUM BETREIBEN EINER BRENNKRAFTMASCHINE**
METHOD FOR OPERATING AN INTERNAL COMBUSTION ENGINE
PROCEDE DE FONCTIONNEMENT D'UN MOTEUR A COMBUSTION INTERNE

(30) Priorität: 24.09.1999 DE 19945813
(43) Veröffentlichungstag der Anmeldung: 03.07.2002
(73) Patentinhaber: ROBERT BOSCH GMBH, 70442 Stuttgart (DE)
(72) Erfinder: UHL, Stephan, D-88045 Friedrichshafen (DE); ROTH, Andreas, D-75417 Muehlacker-Lomersheim (DE)
(86) Internationale Anmeldenummer: PCT/DE2000/002950
(87) Internationale Veröffentlichungsnummer: WO 2001/023734

(56) Entgegenhaltungen:
- EP-A- 0 761 961
- US-A- 5 845 225
- US-A- 5 858 942
- PATENT ABSTRACTS OF JAPAN vol. 2000, no. 09, 13. Oktober 2000 (2000-10-13) & JP 2000 161192 A (NISSAN MOTOR CO LTD), 13. Juni 2000 (2000-06-13)

## Beschreibung

### Stand der Technik

Die Erfindung betrifft ein Verfahren und eine Vorrichtung zum Betreiben einer Brennkraftmaschine, insbesondere eines Kraftfahrzeugs, bei dem Kraftstoff in einen Brennraum geleitet und dort verbrannt wird.

Das Betreiben von Brennkraftmaschinen bei ungünstigen Betriebsbedingungen kann dazu führen, dass sich Ablagerungen im Brennraum bilden. Insbesondere bei Brennkraftmaschinen mit direkter Kraftstoffeinspritzung können sich insbesondere auf den Einspritzventilen bzw. auf der Spitze oder in der Spitze der Einspritzventile Ablagerungen bilden, die sich ungünstig auf die Strahlaufbereitung und damit auf die Verbrennung auswirken können. In der Regel spricht man von einer Verkokung der Einspritzventile.

Aus der US 4841765 A ist eine Brennkraftmaschine bekannt, bei der ein Luft/Kraftstoffgemisch über Einspritzventile direkt in die Brennräume der Brennkraftmaschine eingespritzt wird. Über eine Aussetzererkennung werden mit Hilfe einem externen Sauerstoff-Analysegerät teilweise verstopfte Einspritzventile detektiert.

Aus der DE 198 28 279 A1 ist eine elektronische Steuereinrichtung bekannt, mittels der eine Gleichstellung der zylinderindividuellen Drehmomentenbeiträge bei einem mehrzylindrigen Verbrennungsmotor durchgeführt werden kann. Hierbei werden zur Angleichung der zylinderindividuellen Drehmomentenbeiträge beispielsweise die eingespritzte Kraftstoffmenge, der Zündzeitpunkt (beim Ottomotor), die Abgasrückführrate oder die Einspritzlage variiert. Die Bestimmung der zylinderindividuellen Drehmomentenbeiträge kann durch die Auswertung des zeitlichen Verlaufs der Drehbewegung der Kurbel- oder Nockenwelle erfolgen, wobei einzelne Segmentzeiten erfaßt werden. Alternativ können Laufunruhewerte, die für die Verbrennungsaussetzererkennung ohnehin im Steuergerät gebildet werden, genutzt werden. Ziel der Zylindergleichstellung ist es, die Laufunruhewerte mit einem Regelkonzept zu minimieren. Abhängig vom erkannten Muster und vom Betrag der einzelnen gefilterten und ungefilterten Laufunruhewerte können am Motor entsprechende Eingriffe vorgenommen werden. Insbesondere bei einem Motor mit Direkteinspritzung kann eine Einspritzventilverkokung ein zu niedriges Moment des entsprechenden Zylinders hervorrufen. Der entsprechende Zylinder läuft in diesem Fall zu mager. Hauptbestandteile der Regelfunktion sind entsprechend der DE 198 28 279 A1 zylinderindividuelle PI-Regler.

Die noch nicht vorveröffentlichte deutsche Patentanmeldung DE 100 09 065.6 beschreibt ein Verfahren und eine Einrichtung zur Wirkungsüberwachung einer Zylindergleichstellungsregelung. Entsprechend der Beschreibungseinleitung besteht ein besonderer Bedarf bei einem direkt einspritzenden Otto-Motor. Hier kann, verursacht durch eine geringe Toleranzverträglichkeit des Brennverfahrens im Schichtbetrieb und/oder durch Toleranzen der verwendeten Hochdruck-Einspritzventile bzw. in der Verteilung des Kraftstoffes auf die einzelnen Zylinder, eine erhöhte Laufunruhe eintreten. Auch alterungsbedingte Änderungen der Durchflußcharakteristik der Hochdruck-Einspritzventile können eine Rolle spielen. Im Rahmen der DE 100 09 065.6 wird vorzugsweise der Drehmomentbeitrag (Ist-Moment) eines Zylinders relativ zu seinem Zündungsvorgänger, d.h. keine Absolutmomentenbestimmung, über eine Auswertung des zeitlichen Verlaufs der Kurbeloder Nockenwellendrehung erfaßt. Verbesserungen im Bereich der Zylindergleichstellung werden dadurch erreicht, dass eine Wirkungsüberwachung für die Zylindergleichstellungsregelung vorgesehen ist und dass bei Störungen im Bereich der Zylindergleichstellungsregelung ein entsprechendes Fehlersignal erzeugt wird. Die Wirkungsüberwachung erfolgt derart, dass die zylinderindividuellen Drehmomentbeiträge nach einem erfolgten Zylindergleichstellungsregelungseingriff dahingehend überprüft werden, ob die Regelung Wirkung zeigt. Ist die Wirkung nicht in dem Maße eingetreten, wie gewünscht, wird sukzessive die Regelkreisverstärkung der zylinderindividuellen PI-Regler bis zu einem vorgebbaren Endwert reduziert. Die Regelung arbeitet hierdurch robuster, aber auch dynamisch langsamer, was in Kauf genommen wird. Stellt sich auch nach Einstellung der PI-Regler auf den vorgegebenen Endwert nicht die gewünschte Wirkung ein, wird ein Fehlersignal erzeugt.

Der vorliegenden Erfindung liegt die Aufgabe zugrunde, ein Verfahren der gattungsgemäßen Art zu schaffen, mit dem auf einfache Weise Ablagerungen in den Brennräumen der Brennkraftmaschine erkannt und entfernt werden.

Die Aufgabe der vorliegenden Erfindung wird mit den Merkmalen des Anspruchs 1 gelöst.

### Vorteile der Erfindung

Der besonders große Vorteil der vorliegenden Erfindung liegt darin, dass mit einfachen Mitteln der Brennraum über die gesamte Lebensdauer der Brennkraftmaschine frei von Ablagerungen gehalten werden kann, wodurch immer optimale Bedingungen für eine gute Verbrennung gegeben sind.

Ein weiterer Vorteil liegt darin, dass durch die Wassereinspritzung die Verbrennungstemperatur abgesenkt wird und damit verbunden auch die NOx-Emission geringer wird. Weiterhin wird durch den Wasserdampfdruck des aufgrund der hohen Temperatur im Brennraum verdampften Wassers der thermodynamische Wirkungsgrad der Brennkraftmaschine verbessert.

Weitere Vorteile der Erfindung ergeben sich in Verbindung mit den Unteransprüchen aus der nachfolgenden Beschreibung von Ausführungsbeispielen.

### Zeichnung

Ausführungsbeispiele der Erfindung sind in der Zeichnung dargestellt und in der nachfolgenden Beschreibung näher erläutert.
Die Figur 1 zeigt schematisch eine Darstellung einer Brennkraftmaschine mit einem Steuergerät,
die Figur 2 zeigt ein Ablaufdiagramm des erfindungsgemäßen Verfahrens und
die Figur 3 zeigt schematisch eine Darstellung einer Brennkraftmaschine mit einem Steuergerät und mit einer Vorrichtung mit der Wasser oder eine beliebige andere Reinigungsflüssigkeit der angesaugten Verbrennungsluft zugesetzt werden kann.

### Beschreibung der Ausführunasbeispiele

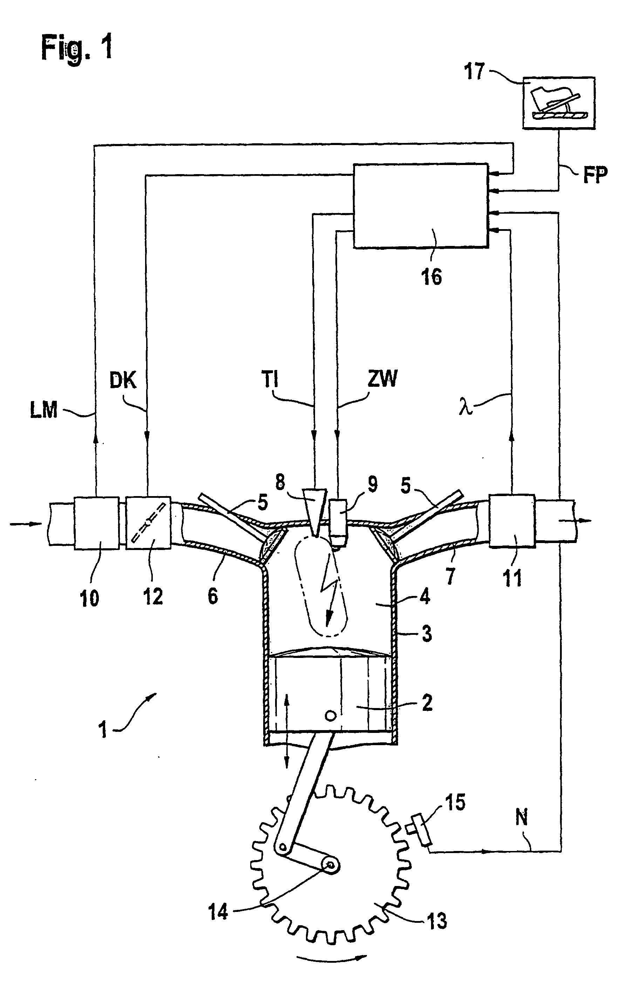

In der Figur 1 ist eine Brennkraftmaschine 1 dargestellt, bei der ein Kolben 2 in einem Zylinder 3 hin und her bewegbar ist. Der Zylinder 3 ist mit einem Brennraum 4 versehen, an den über Ventile 5 ein Ansaugrohr 6 und ein Abgasrohr 7 angeschlossen sind. Des Weiteren sind mit Brennraum 4 ein mit einem Signal TI ansteuerbares Einspritzventil 8 und eine mit einem Signal ZW ansteuerbare Zündkerze 9 verbunden. Die Signale TI und ZW werden hierbei von einem Steuergerät 16 an das Einspritzventil 8 bzw. die Zündkerze 9 übertragen.

Das Ansaugrohr 6 ist mit einem Luftmassensensor 10 und das Abgasrohr 7 mit einem Lambda-Sensor 11 versehen. Der Luftmassensensor 10 mißt die Luftmasse der dem Ansaugrohr 6 zugeführten Frischluft und erzeugt in Abhängigkeit davon ein Signal LM. Der Lambda-Sensor 11 mißt den Sauerstoffgehalt des Abgases in dem Abgasrohr 7 und erzeugt in Abhängigkeit davon ein Signal Lambda. Die Signale des Luftmassensensors 10 und des Lambda-Sensors 11 werden dem Steuergerät 16 zugeführt.

In dem Ansaugrohr 6 ist eine Drosselklappe 12 untergebracht, deren Drehstellung mittels eines Signals DK einstellbar ist.

In einer ersten Betriebsart, dem Schichtbetrieb der Brennkraftmaschine 1, wird die Drosselklappe 12 weit geöffnet. Der Kraftstoff wird von dem Einspritzventil 8 während einer durch den Kolben 2 hervorgerufenen Verdichtungsphase in den Brennraum 4 eingespritzt. Dann wird mit Hilfe der Zündkerze 9 der Kraftstoff entzündet, so dass der Kolben 2 in der nunmehr folgenden Arbeitsphase durch die Ausdehnung des entzündeten Kraftstoffs angetrieben wird.

In einer zweiten Betriebsart, dem Homogenbetrieb der Brennkraftmaschine 1, wird die Drosselklappe 12 in Abhängigkeit von der erwünschten, zugeführten Luftmasse teilweise geöffnet bzw. geschlossen. Der Kraftstoff wird von dem Einspritzventil 8 während einer durch den Kolben 2 hervorgerufenen Ansaugphase in den Brennraum 4 eingespritzt. Durch die gleichzeitig angesaugte Luft wird der eingespritzte Kraftstoff verwirbelt und damit im Brennraum 4 im wesentlichen gleichmäßig verteilt. Danach wird das Kraftstoff-/Luft-Gemisch während der Verdichtungsphase verdichtet, um dann von der Zündkerze 9 entzündet zu werden. Durch die Ausdehnung des entzündeten Kraftstoffs wird der Kolben 2 angetrieben.

Im Schichtbetrieb wie auch im homogenen Betrieb wird durch den angetriebenen Kolben eine Kurbelwelle 14 in eine Drehbewegung versetzt, über die letztendlich die Räder des Kraftfahrzeugs angetrieben werden. Auf der Kurbelwelle 14 ist ein Zahnrad 16 angeordnet, dessen Zähne von einem unmittelbar gegenüber angeordneten Drehzahlsensor 15 abgetastet werden. Der Drehzahlsensor 15 erzeugt ein Signal, aus dem die Drehzahl N der Kurbelwelle 14 ermittelt wird und übermittelt dieses Signal an das Steuergerät 16.

Die im Schichtbetrieb und im Homogenbetrieb von dem Einspritzventil 8 in den Brennraum eingespritzte Kraftstoffmasse wird von dem Steuergerät 16 insbesondere im Hinblick auf einen geringen Kraftstoffverbrauch und/oder eine geringe Schadstoffentwicklung gesteuert und/oder geregelt. Zu diesem Zweck ist das Steuergerät 16 mit einem Mikroprozessor versehen, der in einem Speichermedium, insbesondere in einem Read Only Memory (ROM) ein Programm abgespeichert hat, das dazu geeignet ist, die gesamte Steuerung und/oder Regelung der Brennkraftmaschine 1 durchzuführen.

Das Steuergerät 16 ist von Eingangssignalen beaufschlagt, die mittels Sensoren gemessene Betriebsgrößen der Brennkraftmaschine darstellen. Beispielsweise ist das Steuergerät 16 mit dem Luftmassensensor 10, dem Lambda-Sensor 11 und dem Drehzahlsensor 15 verbunden. Des Weiteren ist das Steuergerät 16 mit einem Fahrpedalsensor 17 verbunden, der ein Signal FP erzeugt, dass die Stellung eines von einem Fahrer betätigbaren Fahrpedals und damit das von dem Fahrer angeforderte Moment angibt. Das Steuergerät 16 erzeugt Ausgangssignale, mit den über Aktoren das Verhalten der Brennkraftmaschine 1 entsprechend der erwünschten Steuerung und/oder Regelung beeinflußt werden kann. Beispielsweise ist das Steuergerät 16 mit dem Einspritzventil 8, der Zündkerze 9 und der Drosselklappe 12 verbunden und erzeugt die zu deren Ansteuerung erforderlichen Signale TI, ZW und DK.

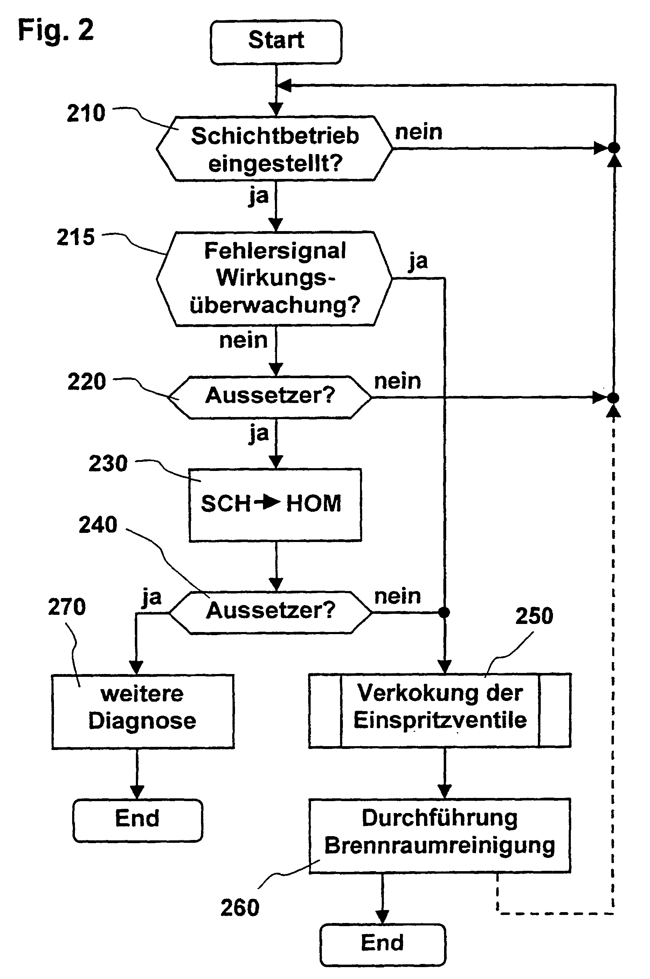

Die Figur 2 zeigt ein Ablaufdiagramm des erfindungsgemäßen Verfahrens, insbesondere für eine Brennkraftmaschine mit Benzindirekteinspritzung.

Der in der Figur 2 beschriebene Schritt 215, in dem die Wirkung der Zylindergleichstellungsregelung abgefragt wird, basiert beispielsweise auf dem in der nicht vorveröffentlichten deutschen Patentanmeldung DE 100 09 065.6 beschriebenen Verfahren zur Wirkungsüberwachung einer Zylindergleichstellungsregelung. Die hierzu notwendigen Eingangsdaten werden von dem Drehzahlsensor 15 an das Steuergerät 16 geliefert, welches auf dieser Grundlage die Ansteuerung/Anpassung der zylinderindividuellen Drehmomentenbeiträge vornimmt. Hierzu wird von dem Steuergerät 16 beispielsweise die eingespritzte Kraftstoffmenge (TI), der Zündzeitpunkt (ZW), die Abgasrückführrate (in Figur 2 nicht dargestellt) oder die Einspritzlage (TI) variiert.

Nach einem Start des Verfahrens wird in einem Schritt 210 überprüft, ob Schichtbetrieb vorliegt. Solange kein Schichtbetrieb gegeben ist, wird diese Abfrage fortlaufend durchgeführt. Ist dagegen der Schichtbetrieb gegeben, wird in einem Schritt 215 überprüft, ob ein Fehlersignal der Wirkungsüberwachung vorliegt. Ist dies der Fall, die Zylindergleichstellung zeigt also keine Wirkung, wird direkt zum Schritt 250 übergegangen, der im folgenden noch eingehender beschrieben wird. Es wird somit unmittelbar auf eine Verkokung geschlossen. Stellt sich in Schritt 215 hingegen heraus, dass die Wirkungsüberwachung der Zylindergleichstellung kein Fehlersignal erzeugt, so wird in Schritt 220 überprüft, ob in der Betriebsart Schichtbetrieb Verbrennungsaussetzer auftreten. Können keine Verbrennungsaussetzer festgestellt werden, so wird zu Schritt 210 zurückgesprungen. Werden dagegen Verbrennungsaussetzer erkannt, dann wird in einem Schritt 230 mit Hilfe des Steuergeräts 16 von der Betriebsart Schichtbetrieb in die Betriebsart Homogenbetrieb umgeschaltet.

Im Schritt 240 wird wie bereits im Schritt 220 in der Betriebsrat Homogenbetrieb geprüft, ob Verbrennungsaussetzer auftreten. Werden keine Verbrennungsaussetzer festgestellt, dann wird in einem Schritt 250 daraus geschlossen, dass die Einspritzventile verkokt bzw. sich Ablagerungen auf den Einspritzventilen gebildet haben.

Ablagerungen auf den Einspritzventilen können dazu führen, dass die bei der Benzindirekteinspritzung wichtige Strahlaufbereitung gestört wird. Es wird zwar noch annähernd die gleiche Kraftstoffmenge in den Brennraum 4 eingespritzt, aber die Strahlform bzw. Strahlführung kann aufgrund der Ablagerungen verändert sein. Dies hat insbesondere im Schichtbetrieb negative Auswirkungen, da zum Zündzeitpunkt keine zündfähige Luft-/Kraftstoff-Wolke in der unmittelbaren Umgebung der Zündkerze 9 vorhanden ist, wodurch Verbrennungsaussetzer auftreten oder gar keine Verbrennung mehr stattfindet. Im Homogenbetrieb stört eine geringfügige Verkokung der Einspritzventile 8 wenig, da hier die Verbrennung nicht wesentlich von der Strahlführung des eingespritzten Kraftstoffs abhängt. Der Kraftstoff wird frühzeitig, bereits während der Ansaugphase eingespritzt, wodurch ausreichend Zeit für eine gleichmäßige Verteilung vorhanden ist.

In einem Schritt 260 werden Maßnahmen eingeleitet, um die Ablagerungen auf den Einspritzventilen 8 zu entfernen. Alternativ zu der in Figur 2 dargestellten Beendigung des Verfahrens kann nach dem Schritt 260 zu Schritt 210 zurückgesprungen werden, um zu überprüfen, ob die Maßnahmen zur Brennraumreinigung erfolgreich waren. Diese Alternative ist durch eine gestrichelte Linie angedeutet.

Als Maßnahme zur Entfernung von Ablagerungen kann beispielsweise eine klopfende Verbrennung herbeigeführt werden. Untersuchungen an Brennkraftmaschinen, die mit klopfender Verbrennung betrieben wurden, ergaben, dass diese Brennkraftmaschinen sehr sauberere Brennräume aufwiesen. Dieser Effekt wird in dieser Erfindung ausgenutzt.

Dies ist darauf zurückzuführen, dass durch die klopfende Verbrennung Druckschwingungen erzeugt werden, die sich dem normalen Druckverlauf überlagern. Durch die zusätzlichen Druckschwingungen werden starke hochfrequente Vibrationen erzeugt, wodurch die Ablagerungen im Brennraum 4 und insbesondere auf den Düsen der Einspritzventile 8 entfernt werden können. Die klopfende Verbrennung muß zeitlich begrenzt werden, um Schäden an der Brennkraftmaschine 1 zu vermeiden.

In Verbindung mit der klopfenden Verbrennung oder auch als selbständige Methode kann auch Wasser oder eine beliebige andere Reinigungsflüssigkeit der angesaugten Verbrennungsluft zugesetzt werden, wodurch ein ähnlicher Reinigungseffekt wie bei der klopfenden Verbrennung erzielt werden kann. Untersuchungen an Brennkraftmaschinen, bei denen Wasser in den Brennraum 4 z.B. über ein undichte Zylinderkopfdichtung eingedrungen oder auch zusätzlich eingespritzt wurde, ergaben, dass diese Brennkraftmaschinen immer besonders sauberere Brennräume aufwiesen. Dieser Effekt wird in dieser Erfindung ausgenutzt.

Nachdem die Brennraumreinigung durchgeführt wurde, wird wieder in den Schichtbetrieb umgeschaltet, um zu überprüfen, ob die Brennkraftmaschine 1 ohne Aussetzer läuft. Werden wieder Aussetzer festgestellt kann beispielsweise das Verfahren wieder neu gestartet werden.

Vorsorglich bzw. zur Vermeidung der Entstehung von Ablagerungen im Brennraum kann auch in vorbestimmten Zeitabständen eine klopfende Verbrennung durchgeführt und/oder Wasser der Luft zugesetzt werden.

Wurden in Schritt 240 auch im Homogenbetrieb Verbrennungsaussetzer erkannt, so wird in Schritt 270 ein weiteres Diagnoseverfahren gestartet. Die Verbrennungsaussetzer können in diesem Fall nicht mehr allein auf Ablagerungen auf den Düsen der Einspritzventile zurückzuführen sein. Beispielsweise können diese Verbrennungsaussetzer auch durch ein nicht mehr kontrolliert öffnendes Einspritzventil 8 oder eine defekte Zündkerze 9 verursacht sein. Eine Verkokung der Einspritzventile 9 kann in diesem Fall jedoch auch nicht ganz ausgeschlossen werden. Auf jeden Fall müssen die Ursachen für diese Verbrennungsaussetzer durch weitere Diagnoseverfahren weiter eingegrenzt werden. Eine entsprechende Abspeicherung der Fehler in einem Fehlerspeicher, kann bei späteren Reparaturarbeiten hilfreich sein, um eine genaue Diagnose zu erstellen.

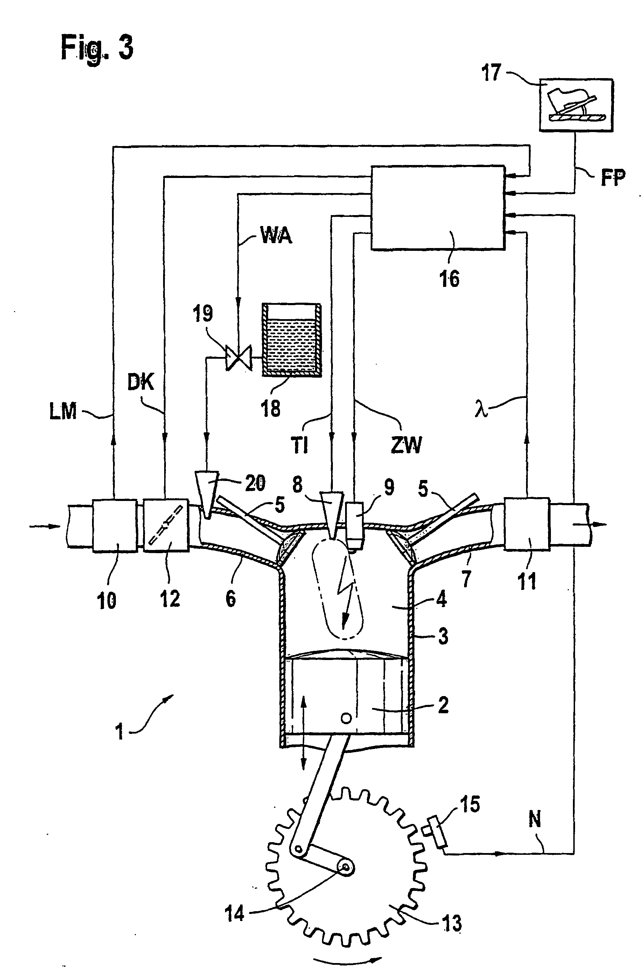

Die Figur 3 zeigt eine Brennkraftmaschine 1 mit einem Steuergerät 16, wie bereits in der Figur 1 abgebildet und mit einer Vorrichtung mit der Wasser oder eine beliebige andere Reinigungsflüssigkeit der Luft zugesetzt werden kann. Der Einfachheit halber wurden die Bezugszeichen der Figur 1 für gleiche Teile übernommen.

Ein Wasserbehälter 18 ist zusätzlich an der Brennkraftmaschine 1 angeordnet. Am Wasserbehälter 18 ist ein Ventil 19 angeordnet, das mit Hilfe des Steuergeräts 16 angesteuert werden kann. Das Ventil 19 ist mit einer Einspritzdüse 20 verbunden. Mit Hilfe der Düse 20 kann bei Betätigung des Ventils 19 Wasser direkt in das Ansaugrohr 6 gelangen.

Werden beispielsweise vom Steuergerät 16 Ablagerungen auf den Einspritzventilen 8 erkannt, so wird ein Signal WA erzeugt, mit dem das Ventil 19 angesteuert bzw. geöffnet wird. Aufgrund des Unterdrucks der in der Regel im Ansaugrohr 6 herrscht, wird nun bei geöffnetem Ventil 19 Wasser aus dem Wasserbehälter 18 durch das Ventil 19 und der Düse 20 in das Saugrohr 6 eingeleitet. Das Wasser im Saugrohr 6 gelangt beim nächsten Ansaugvorgang der Brennkraftmaschine 1 in den Brennraum 4. Dort vermischt sich das Wasser mit dem während des Einspritzvorgangs in den Brennraum 4 gelangenden Luft und Kraftstoff. Aufgrund der hohen Temperatur im Brennraum 4 verdampft das Wasser sofort und trägt zur Reinigung des Brennraums bei.

Obwohl als Ausführungsbeispiel eine Brennkraftmaschine mit Benzindirekteinspritzung (BDE) gewählt wurde, ist es durchaus möglich, dieses Verfahren in etwas modifizierter Weise auch auf andere Brennkraftmaschinen wie z.B. einer Diesel-Brennkraftmaschine oder einer Brennkraftmaschine mit Saugrohreinspritzung (SRE) anzuwenden.

Eine besondere Ausführung des erfindungsgemäßen Verfahrens ist seine Realisierung in Form von einem Computerprogramm mit Programmcode-Mitteln. Ein solches Computerprogramm kann auf einem Speichermedium, wie beispielsweise einer CD-ROM oder einem EPROM, gespeichert sein und ermöglicht es, wenn das Computerprogramm in einem Steuergerät (bzw. im allgemeinen ein beliebiger Computer) ausgeführt wird, dass die erfindungsgemäßen Verfahrensschritte zur Brennraumreinigung eingeleitet werden. Auf diese Weise bietet sich für den Hersteller eines solchen Produkts eine einfache Möglichkeit, das Produkt an einen Kunden auszuliefern.

## Patentansprüche

1. Verfahren zum Betreiben einer Brennkraftmaschine (1), insbesondere eines Kraftfahrzeugs, bei dem Kraftstoff in einen Brennraum (4) geleitet und dort verbrannt wird, **dadurch gekennzeichnet, dass** wenigstens über die Wirkungsüberwachung einer Zylindergleichstellung auf Ablagerungen im Brennraum (4) geschlossen und im Folgenden gezielt Maßnahmen zur Reinigung des Brennraums (4) eingeleitet werden.

2. Verfahren nach Anspruch 1 zum Betreiben einer direkteinspritzenden Brennkraftmaschine (1), insbesondere eines Kraftfahrzeugs, bei dem Kraftstoff in einer ersten Betriebsart während einer Ansaugphase oder in einer zweiten Betriebsart während einer Kompressionsphase mit Hilfe von Einspritzventilen (8) direkt in Brennräume (4) der Brennkraftmaschine (1) gespritzt wird und bei dem fortlaufend eine Zylindergleichstellung mit Wirkungsüberwachung durchgeführt wird, **dadurch gekennzeichnet, dass** bei Vorliegen eines Fehlersignals der Wirkungsüberwachung auf eine Verkokung der Einspritzventile geschlossen wird.

3. Verfahren nach Anspruch 1 zum Betreiben einer direkteinspritzenden Brennkraftmaschine (1), insbesondere eines Kraftfahrzeugs, bei dem Kraftstoff in einer ersten Betriebsart während einer Ansaugphase oder in einer zweiten Betriebsart während einer Kompressionsphase mit Hilfe von Einspritzventilen (8) direkt in Brennräume (4) der Brennkraftmaschine (1) gespritzt wird und bei dem fortlaufend eine Zylindergleichstellung mit Wirkungsüberwachung und eine Aussetzererkennung durchgeführt wird, **dadurch gekennzeichnet, dass** bei Vorliegen eines Fehlersignals der Wirkungsüberwachung auf eine Verkokung der Einspritzventile geschlossen wird oder bei Erkennen von Aussetzern während des Betriebs der Brennkraftmaschine (1) in der ersten Betriebsart, anschließend in die zweite Betriebsart umgeschaltet wird und wenn in der zweiten Betriebsart keine Aussetzer auftreten, auf Ablagerungen auf den Düsen der Einspritzventile (8) bzw. auf eine Verkokung der Einspritzventile (8) geschlossen wird.

4. Verfahren nach Anspruch 1, 2 oder 3, **dadurch kennzeichnet, dass** zur Reinigung des Brennraums (4) eine klopfende Verbrennung herbeigeführt und/oder eine Reinigungsflüssigkeit der angesaugten Verbrennungsluft zugesetzt wird.

5. Verfahren nach Anspruch 4, **dadurch kennzeichnet, dass** als Reinigungsflüssigkeit Wasser verwendet wird.

6. Verfahren nach Anspruch 1 oder 4, **dadurch gekennzeichnet, dass** die Maßnahmen zur Reinigung des Brennraums (4) für eine vorbestimmte Zeitdauer durchgeführt werden.

7. Verfahren nach Anspruch 1 oder 4, **dadurch gekennzeichnet, dass** die Maßnahmen zur Reinigung des Brennraums (4) so lange durchgeführt werden, bis keine Ablagerungen im Brennraum (4) mehr erkannt werden.

8. Verfahren nach Anspruch 6 oder 7, **dadurch gekennzeichnet, dass** die Maßnahmen zur Reinigung des Brennraums (4), insbesondere die klopfende Verbrennung nur solange durchgeführt werden, wie keine Schädigung der Brennkraftmaschine (1) zu erwarten ist.

9. Verfahren nach Anspruch 1 oder 4, **dadurch gekennzeichnet, dass** die Maßnahmen zur Reinigung des Brennraums (4) vorbeugend in vorbestimmten Zeitintervallen für eine vorbestimmte Zeitdauer durchgeführt werden.

10. Verfahren nach Anspruch 1 in Verbindung mit einer direkteinspritzenden Brennkraftmaschine (1), bei dem Kraftstoff in einer ersten Betriebsart während einer Ansaugphase oder in einer zweiten Betriebsart während einer Kompressionsphase mit Hilfe von Einspritzventilen (8) direkt in Brennräume (4) der Brennkraftmaschine (1) gespritzt wird und bei dem fortlaufend eine Aussetzererkennung durchgeführt wird, **dadurch gekennzeichnet, dass** bei Erkennen von Aussetzern während des Betriebs der Brennkraftmaschine (1) in der ersten Betriebsart, anschließend in die zweite Betriebsart umgeschaltet wird und wenn in der zweiten Betriebsart auch Aussetzer auftreten, auf einen allgemeinen Fehler geschlossen wird und weitere Diagnoseverfahren zum Eingrenzen der Fehlerursachen gestartet werden.

11. Verfahren nach wenigstens Anspruch 1, **gekennzeichnet durch** seine Anwendung bei einer Diesel-Brennkraftmaschine.

12. Computerprogramm mit Programmcode-Mitteln zur Anwendung eines Verfahren zum Betreiben einer Brennkraftmaschine nach mindestens einem der Ansprüche 1 bis 11, wobei alle Schritte von jedem beliebigen der Ansprüche 1 bis 11 durchgeführt werden, wenn das Programm auf einem Computer, insbesondere einem Steuergerät, ausgeführt wird.

13. Steuergerät zum Betreiben einer Brennkraftmaschine (1), insbesondere eines Kraftfahrzeugs, **dadurch gekennzeichnet, dass** Mittel zur Durchführung des Verfahrens nach wenigstens einem der Ansprüche von 1 bis 10 vorhanden sind.

14. Brennkraftmaschine (1), insbesondere eines Kraftfahrzeugs, **dadurch gekennzeichnet, dass** Mittel zur Durchführung des Verfahrens nach wenigstens einem der Ansprüche von 1 bis 10 vorhanden sind.

## Claims

1. Method for operating an internal combustion engine (1), in particular of a motor vehicle, in which fuel is passed into a combustion chamber (4), where it is burnt, **characterized in that** at least the action monitoring of cylinder compensation is used to work out when deposits are present in the combustion chamber (4), and measures are then deliberately taken to clean the combustion chamber (4).

2. Method according to Claim 1 for operating a direct-injection internal combustion engine (1), in particular of a motor vehicle, in which fuel is injected directly into combustion chambers (4) of the internal combustion engine (1), in a first operating mode during an induction phase or in a second operating mode during a compression phase, with the aid of injection valves (8), and in which cylinder compensation with action monitoring is carried out continuously, **characterized in that** in the event of a fault signal from the action monitoring, it is concluded that there is coking of the injection valves.

3. Method according to Claim 1 for operating a direct-injection internal combustion engine (1), in particular of a motor vehicle, in which fuel is injected directly into combustion chambers (4) of the internal combustion engine (1), in a first operating mode during an induction phase or in a second operating mode during a compression phase, with the aid of injection valves (8), and in which cylinder compensation with action monitoring and misfire detection are carried out continuously, **characterized in that** if there is a fault signal from the action monitoring, it is concluded that there is coking of the injection valves, or if misfires are detected during operation of the internal combustion engine (1) in the first operating mode, the engine is then switched to the second operating mode, and if no misfires occur in the second operating mode, it is concluded that there are deposits on the nozzles of the injection valves (8) or that there is coking of the injection valves (8).

4. Method according to Claim 1, 2 or 3, **characterized in that** to clean the combustion chamber (4) knocking combustion is implemented and/or a cleaning liquid is added to the intake combustion air.

5. Method according to Claim 4, **characterized in that** the cleaning liquid used is water.

6. Method according to Claim 1 or 4, **characterized in that** the measures for cleaning the combustion chamber (4) are carried out for a predetermined period of time.

7. Method according to Claim 1 or 4, **characterized in that** the measures for cleaning the combustion chamber (4) are carried out until deposits are no longer detected in the combustion chamber (4).

8. Method according to Claim 6 or 7, **characterized in that** the measures for cleaning the combustion chamber (4), in particular the knocking combustion, are carried out until there is no longer any expectation of damage to the internal combustion engine (1).

9. Method according to Claim 1 or 4, **characterized in that** the measures for cleaning the combustion chamber (4) are carried out for a predetermined duration of time at predetermined time intervals as precautionary measures.

10. Method according to Claim 1 in combination with a direct-injection internal combustion engine (1), in which fuel is injected directly into combustion chambers (4) of the internal combustion engine (1), in a first operating mode during an induction phase or in a second operating mode during a compression phase, with the aid of injection valves (8), and in which misfire detection is carried out continuously, **characterized in that** if misfires are detected while the internal combustion engine (1) is operating in the first operating mode, the engine is then switched to the second operating mode, and if misfires also occur in the second operating mode, it is concluded that there is a general fault, and further diagnosis methods are initiated in order to narrow down the causes of the fault.

11. Method according to at least Claim 1, **characterized by** its use in a diesel internal combustion engine.

12. Computer programme with programme code means for applying a method for operating an internal combustion engine according to at least one of Claims 1 to 11, in which all the steps from any one of Claims 1 to 11 are carried out when the programme is run on a computer, in particular a control unit.

13. Control unit for operating an internal combustion engine (1), in particular of a motor vehicle, **characterized in that** there are means for carrying out the method according to at least one of Claims 1 to 10.

14. Internal combustion engine (1), in particular of a motor vehicle, **characterized in that** there are means for carrying out the method according to at least one of Claims 1 to 10.

## Revendications

1. Procédé de fonctionnement d'un moteur à combustion interne (1), en particulier d'un véhicule automobile, dans lequel du carburant est acheminé dans une chambre de combustion (4) et y est brûlé,
**caractérisé en ce qu'**
au moins par la surveillance de l'effet d'une coordination des cylindres, on conclut à des dépôts dans la chambre de combustion (4) et on met ensuite en oeuvre des mesures ciblées pour le nettoyage de la chambre de combustion (4).

2. Procédé selon la revendication 1 pour le fonctionnement d'un moteur à combustion interne à injection directe (1), en particulier d'un véhicule automobile, dans lequel du carburant, dans un premier mode de fonctionnement pendant une phase d'admission ou dans un deuxième mode de fonctionnement pendant une phase de compression, est injecté directement dans les chambres de combustion (4) du moteur à combustion interne (1) à l'aide de soupapes d'injection (8), et dans lequel on effectue ensuite une coordination des cylindres avec surveillance de l'effet,
**caractérisé en ce qu'**
en présence d'un signal d'erreur de la surveillance de l'effet, on conclut à une obstruction des soupapes d'injection.

3. Procédé selon la revendication 1 pour le fonctionnement d'un moteur à combustion interne à injection directe (1), en particulier d'un véhicule automobile, dans lequel du carburant, dans un premier mode de fonctionnement pendant une phase d'admission ou dans un deuxième mode de fonctionnement pendant une phase de compression, est injecté directement dans les chambres de combustion (4) du moteur à combustion interne (1) à l'aide de soupapes d'injection (8), et dans lequel on effectue ensuite une coordination des cylindres avec surveillance de l'effet et une reconnaissance des ratés,
**caractérisé en ce qu'**
en présence d'un signal d'erreur de la surveillance de l'effet, on conclut à une obstruction des soupapes d'injection, ou lorsque des ratés sont détectés pendant le fonctionnement du moteur à combustion interne (1), on passe dans le premier mode de fonctionnement, ensuite dans le deuxième mode de fonctionnement, et lorsque, dans le deuxième mode de fonctionnement, aucun raté n'est détecté, on conclut à des dépôts sur les buses d'injection des soupapes d'injection (8) ou à une obstruction des soupapes d'injection (8).

4. Procédé selon la revendication 1, 2 ou 3,
**caractérisé en ce que**
pour le nettoyage de la chambre de combustion (4), une combustion par à-coups est effectuée et/ou un liquide de nettoyage est ajouté à l'air de combustion admis.

5. Procédé selon la revendication 4,
**caractérisé en ce qu'**
on utilise de l'eau en tant que liquide de nettoyage.

6. Procédé selon la revendication 1 ou 4,
**caractérisé en ce que**
les mesures pour le nettoyage de la chambre de combustion (4) sont mises en oeuvre pendant une durée prédéterminée.

7. Procédé selon la revendication 1 ou 4,
**caractérisé en ce que**
les mesures pour le nettoyage de la chambre de combustion (4) sont mises en oeuvre jusqu'à ce que plus aucun dépôt ne soit détecté dans la chambre de combustion (4).

8. Procédé selon la revendication 6 ou 7,
**caractérisé en ce que**
les mesures pour le nettoyage de la chambre de combustion (4), en particulier la combustion par à-coups, ne sont mises en oeuvre que tant qu'aucun endommagement du moteur à combustion interne (1) n'est à craindre.

9. Procédé selon la revendication 1 ou 4,
**caractérisé en ce que**
les mesures pour le nettoyage de la chambre de combustion (4) sont mises en oeuvre à titre préventif à intervalles réguliers pendant une durée prédéterminée.

10. Procédé selon la revendication 1, en association avec un moteur à combustion interne à injection directe (1), dans lequel du carburant, dans un premier mode de fonctionnement pendant une phase d'admission ou dans un deuxième mode de fonctionnement pendant une phase de compression, est injecté directement dans les chambres de combustion (4) du moteur à combustion interne (1) à l'aide de soupapes d'injection (8), et dans lequel on effectue ensuite une reconnaissance des ratés,
**caractérisé en ce que**
lorsque des ratés sont détectés pendant le fonctionnement du moteur à combustion interne (1), on passe dans le premier mode de fonctionnement, ensuite dans le deuxième mode de fonctionnement, et lorsque dans le deuxième mode de fonctionnement, des ratés sont également détectés, on conclut à une erreur générale et on lance des procédures de diagnostic supplémentaires pour cerner les causes de l'erreur.

11. °) Procédé selon au moins la revendication 1,
**caractérisé par**
son utilisation dans un moteur Diesel à combustion interne.

12. Programme informatique comportant des moyens de codage de programme permettant de mettre en application un procédé de fonctionnement d'un moteur à combustion interne selon au moins l'une des revendications 1 à 11, toutes les étapes de chacune des revendications 1 à 11 étant réalisées lorsque le programme est exécuté sur un ordinateur, en particulier un appareil de commande.

13. Appareil de commande pour le fonctionnement d'un moteur à combustion interne (1), en particulier d'un véhicule automobile,
**caractérisé en ce qu'**
il est prévu des moyens pour mettre en oeuvre le procédé selon au moins l'une des revendications 1 à 10.

14. Moteur à combustion interne (1), en particulier d'un véhicule automobile,
**caractérisé en ce qu'**
il est prévu des moyens pour mettre en oeuvre le procédé selon au moins l'une des revendications 1 à 10.
